# EUROPEAN PATENT APPLICATION

(11) **EP 2 741 445 A1**
(43) Date of publication of application: **11.06.2014**
(21) Application number: 13195815.9
(22) Date of filing: 05.12.2013
(51) Int. Cl.: H04L 12/10, H02H 9/00, H04L 12/40, H04L 25/02, H02J 7/00, H04L 12/28

(54) **Ethernet Based Power Supply for Hospital Bed**

(30) Priority: 07.12.2012 US 201261734481 P
(71) Applicant: Hill-Rom Services, Inc., Batesville, IN 47006-9167 (US)
(72) Inventor: Vanderpohl III, Irvin John, Greensburg, IN Indiana 47240 (US); Tallent, Dan R., Hope, IN Indiana 47246 (US); Pesot, Whitney, Cary, NC North Carolina 27519 (US); Schuman, Richard Joseph, Cary, NC North Carolina 27511 (US)
(74) Representative: Findlay, Alice Rosemary

(57) **Abstract**

A system for supplying power to a person support apparatus is described herein. An Ethernet transformer (46) receives both data and power signals via an Ethernet connection and supplies power to a battery (60) mounted on a person support apparatus. The Ethernet transformer (46) also supplies data signals to a controller (56).

## Description

Supplying power to a person support apparatus to is an ongoing challenge. While several systems and methods exist for supplying power to a person support apparatus, opportunity exists for continued development in this area.

The present disclosure includes one or more of the features recited in the appended claims and/or the following features which, alone or in any combination, may comprise patentable subject matter.

One embodiment of a power supply system may comprise a person support apparatus. A battery may be mounted on the person support apparatus and may be configured to supply power to the person support apparatus. An Ethernet transformer may be configured to receive data and power signals and may be configured to supply power to the battery.

One embodiment of a method of supplying power to a person support apparatus may comprise supplying data and power to an Ethernet transformer and supplying power from the Ethernet transformer to a battery, the battery mounted on the person support apparatus.

The invention will now be further described by way of example with reference to the accompanying drawings, in which:
FIG. 1 is a perspective view of a person support apparatus, constructed according to one or more of the principles disclosed herein;
FIG. 2 is a block diagram illustrating one embodiment of an Ethernet based power supply system for use with a person support apparatus, constructed according to one or more of the principles disclosed herein;
FIG. 3 is a block diagram illustrating another embodiment of an Ethernet based power supply system for use with a person support apparatus, constructed according to one or more of the principles disclosed herein;

It should be noted that the features illustrated in the drawings are not necessarily drawn to scale, and features of one embodiment may be employed with other embodiments as the skilled artisan would recognize, even if not explicitly stated herein. Descriptions of well-known components and processing techniques may be briefly mentioned or omitted so as to not unnecessarily obscure the described embodiments. The examples used herein are intended merely to facilitate an understanding of ways in which the embodiments may be practiced and to further enable those of skill in the art to practice the embodiments. Accordingly, the examples and embodiments herein are merely illustrative. Moreover, it is noted that like reference numerals represent similar parts throughout the several views of the drawings.

It is understood that the subject matter disclosed is not limited to the particular methodology, protocols, devices, apparatus, materials, applications, etc., described herein, as these may vary. It is also to be understood that the terminology used herein is used for the purpose of describing particular embodiments only.

Unless defined otherwise, all technical and scientific terms used herein have the same meanings as commonly understood by one of ordinary skill in the art.

The subject matter herein is directed to systems and methods for supplying power to a person support apparatus, comprising supply of power to the person support apparatus via an Ethernet connection.

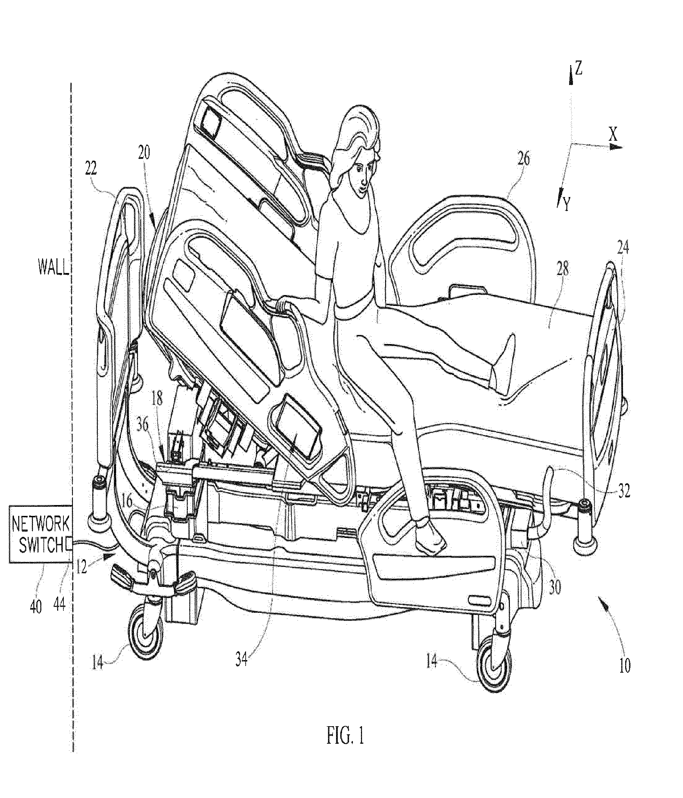

As shown in FIG. 1 a person support apparatus 10 comprises a lower frame 12 supported on wheels 14. In this embodiment a person support apparatus 10 is a bed, while in other embodiments the person support apparatus 10 may be a stretcher or any other furniture. A weigh frame 18 is supported by and configured to variably elevate with respect to lower frame 12 by supports 16 as shown in FIG.1. At least one deck section 20 is supported on the weigh frame 18. In this embodiment the deck section 20 comprises at least one head support deck section configured to support the upper body of a person, a seat support deck section configured to support the seat section of a person and a foot support deck section configured to support the feet of a person. In another embodiment the deck section 20 may comprise any number of sections. In yet another embodiment the weigh frame 18 may serve the function of the deck section 20 and be comprised of multiple sections. The person support apparatus also comprises a head board 22 defining the head end, a foot board 24 defining the foot end and side rails 26 defining the lateral extremities of the person support apparatus 10. A mattress 28 is configured to rest upon the deck section 20 of the person support apparatus 10 in this embodiment. In another embodiment, the mattress 28 may be configured to rest upon the weigh frame 18. A fluid supply 30 is configured to supply fluid into the mattress 28 through an inlet 32. In this embodiment the fluid supply 30 is a compressor while in other embodiments the fluid supply 30 may be a blower or a pump. In the embodiment shown in FIG. 1 the fluid supply is mounted on the lower frame 12, while in another embodiment the fluid supply 30 is mounted on the foot board 24. In other embodiments, the fluid supply 30 may be mounted on any other portion of the person support apparatus 10 such as the side rails 26 or the deck section 20. In yet another embodiment the fluid supply 30 may be configured to rest on the floor. In this embodiment the fluid supply 30 is dedicated to the system for supplying dedicated fluid flow in a mattress, while in another embodiment the fluid supply 30 is configured to supply fluid for other uses. A user interface 34 is mounted on the side rail 26 as shown in FIG.1 in this embodiment while in another embodiment the user interface 34 is configured to be a hand held pendant. In yet another embodiment the user interface 34 may be at a remote location and configured to communicate with the bed controller wirelessly. The user interface 34 displays system messages and /or allows a caregiver to input control parameters. A co-ordinate system is disclosed in FIG. 1 to assist in description of relative positions and motions. As shown, X axis is configured to pass through the middle of the width of the person support apparatus. Axis Y is orthogonal to the X axis such that the X-Y plane is substantially parallel to the weigh frame. Axis Z is orthogonal to the X-Y plane. A number of force transducers which are load cells 36 in this embodiment are positioned between the weigh frame 18 and the lower frame 12 in this embodiment. In other embodiments the load cells 36 may be positioned between the deck section 20 and the weigh frame 18. In other embodiments the weigh frame may be mounted anywhere on the person support apparatus 10 and / or the mattress 12. In yet another embodiment the load cells 36 are mounted to a sheet positioned on top of the person support apparatus 10 and / or the mattress12. Load cells 36 are configured to generate a signal indicative of the force experienced by them and in this embodiment the load cell 36 is configured to generate an electrical signal, while in other embodiments the load cells 36 may generate any type of signal including but not limited to optical signals. In other embodiments any other type of force transducer may be used instead and/or in combination with load cells.

Conventional structures and devices may be provided to adjustably position deck section 20, and such conventional structures and devices may include linkages, drives and other movement members and devices coupled between the weigh frame 18 and the lower frame 12 and/or between the weigh frame 18 and the deck section 20. Control of the position of the deck section 20 and mattress 28 relative to the lower frame 12 is provided in one embodiment by user interface 34, mattress position control panel (not shown) and/or a number of mattress positioning pedals (not shown).

A network switch 40 as shown in FIG. 1 comprises a power over Ethernet (POE) + Ethernet interface 44. The POE + Ethernet interface 44 is configured to connect with the person support apparatus 10 to allow transfer of power and / or data. In this embodiment the network switch 40 is positioned behind a wall of the hospital room while in another embodiment the network switch 40 is positioned inside the room.

Embodiments of person support systems are found in patents US7296312, US6047424, US7176391, US7335839, US7437787, US7253366 and patent application publication US2007/0266499.

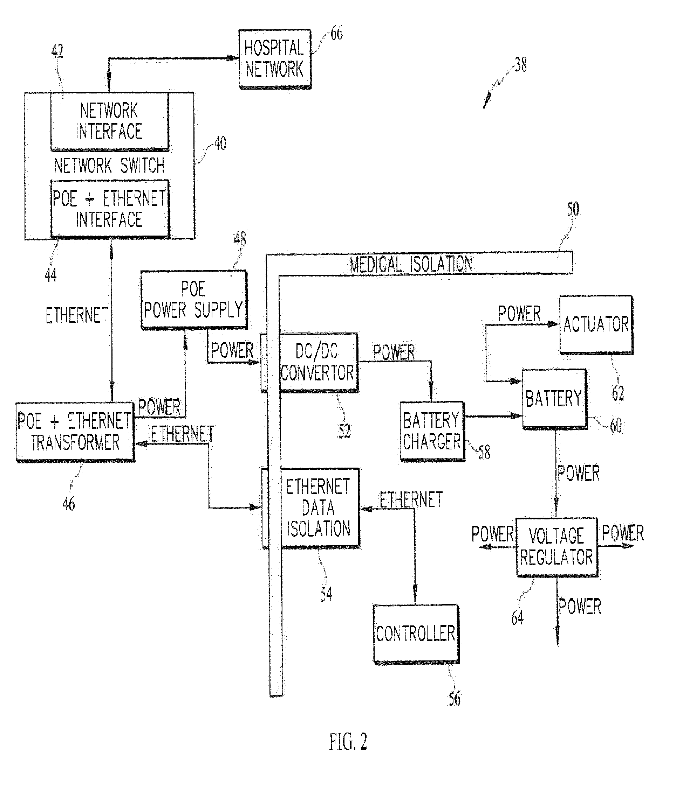

FIG. 2 shows a block diagram illustrating one embodiment of an Ethernet based power supply system 38 for use with a person support apparatus 10. In this embodiment the Ethernet based power supply system 38 comprises a network switch 40. The network switch 40 comprises a network interface 42 configured to communicate with a hospital network 66. In one embodiment the network switch 40 communicates with the hospital network 66 wirelessly. In this embodiment the network switch 40 further comprises a POE + Ethernet interface 44 configured to supply power and data. In this embodiment the POE + Ethernet interface 44 is a standard RJ 45 connector interface. The POE + Ethernet interface 44 is configured to supply data and power to a POE + Ethernet transformer 46 via an Ethernet cable in this embodiment. In this embodiment the POE + Ethernet transformer 46 is mounted on the lower frame 12 of the person support apparatus 10 while in other embodiments the POE + Ethernet transformer 46 may be mounted anywhere on the person support apparatus 10. The POE + Ethernet transformer 46 is configured to separate data and power signals received from the POE + Ethernet interface 44 into separate data and power signals. In one embodiment the POE + Ethernet interface 44 transmits power as the DC or mean component of the signal and data is transferred as the AC component. In other embodiments a data signal may be superimposed on any power signal. In yet another embodiment data and power are transmitted on separate pins of the Ethernet cable connection. The POE + Ethernet transformer 46 is configured to supply power signal to a POE power supply 48. In this embodiment the POE power supply 48 is a switching power supply. In one embodiment the POE power supply 48 is capable of handling at least 25.5 watts (in compliance with POE + guidelines) while in another embodiment the POE power supply 48 is capable of handling at least 60 watts (in compliance with Universal POE - UPOE guidelines). In other embodiments the POE power supply 48 is rated to handle any amount of power. The POE power supply 48 is configured to supply power to a DC/DC convertor 52. The DC/DC convertor 52 is a power supply configured to provide medical isolation of the power received from the POE power supply 48. In this embodiment the isolation of power complies with IEC 60601 standards while in other embodiments the medical isolation of power may comply with any standard. The DC/DC convertor 52 also serves as a voltage step down transformer in one embodiment. Isolated power is supplied by DC/DC convertor 52 to a battery charger circuit 58 in this embodiment. The battery charger circuit 58 in this embodiment converts isolated power into a charge voltage and / or current for the battery 60. In another embodiment multiple batteries 60 are charged by the battery charger circuit 58. The battery charger circuit 58 is configured to mount on a circuit board which in turn mounts on the lower frame 12 in this embodiment. In other embodiments the circuit board comprising the battery charger circuit 58 may be mounted anywhere on the person support apparatus 10. In this embodiment the battery 60 is a Lithium-Ion battery (Li-ion) and is mounted on the lower frame 12 of the person support apparatus 10. In other embodiments battery 60 may be of any type including but not limited to Nickel Cadmium (NiCd) and Nickel Metal Hydride (NiMH). In other embodiments the battery 60 may be mounted anywhere on the person support apparatus 10. In this embodiment the battery 60 is configured to provide a voltage of up to 30 Volts, in one embodiment the battery 60 is configured to provide voltage in the range of 25-30 Volts. In other embodiments the battery 60 may be configured to provide any voltage. At least one actuator 62 and / or a voltage regulator 64 are configured to receive power from the battery 60. In one embodiment the actuator 62 is configured to actuate a portion of the person support apparatus 10, in another embodiment multiple actuators receive power from the battery 60. In one exemplary embodiment the actuator 62 is configured to elevate the weigh frame 18 with respect to the lower frame 12. The voltage regulator 64 is configured to receive power from the battery 60 and supply power within a specified voltage range to other devices. In one exemplary embodiment the voltage regulator 64 is configured to supply voltage up to 3 volts.

The POE + Ethernet Transformer 46 supplies a data signal to an Ethernet data isolation module 54 after isolating the data signal from the signals received from the POE + Ethernet interface 44 in the embodiment shown in FIG.1. Ethernet data isolation module 54 is configured to provide medical isolation to data received from the POE + Ethernet Transformer 46 and supply the data signal to a controller 56. In this embodiment the controller 56 is a microcontroller and is mounted on a circuit board. In one embodiment the controller 56 is mounted on the same circuit board as the battery charger circuit 58 while in another embodiment the controller 56 is mounted on an independent circuit board anywhere on the person support apparatus 10. In this embodiment the controller 56 is configured to communicate with the network switch 40 via Link Layer Discovery Protocol to request additional power. In the embodiment shown in FIG.2 the Ethernet based power supply system 38 allows for both data and power for the hospital bed to supplied through the Ethernet port to reduce the number of cables a caregiver would manage for maintenance and /or setup and / or during transport.

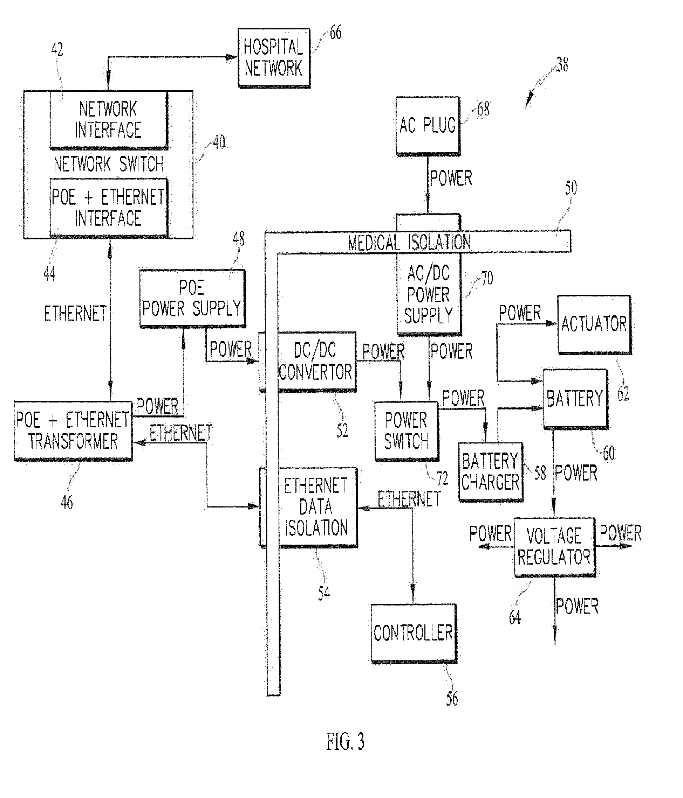

FIG. 3 shows a block diagram illustrating another embodiment of an Ethernet based power supply system 38 for use with a person support apparatus 10. In this embodiment the Ethernet based power supply system 38 comprises a network switch 40. The network switch 40 comprises a network interface 42 configured to communicate with a hospital network 66. In this embodiment the network switch 40 further comprises a POE + Ethernet interface 44 configured to supply power and data. In this embodiment the POE + Ethernet interface 44 is a standard RJ 45 connector interface. The network switch 40 is located behind a wall of a hospital room in this embodiment while in another embodiment the network switch 40 is located within the hospital room. The POE + Ethernet interface 44 is configured to supply data and power to a POE + Ethernet transformer 46 via an Ethernet cable in this embodiment. In this embodiment the POE + Ethernet transformer 46 is mounted on the lower frame 12 of the person support apparatus 10 while in other embodiments the POE + Ethernet transformer 46 may be mounted anywhere on the person support apparatus 10. The POE + Ethernet transformer 46 is configured to separate data and power signals received from the POE + Ethernet interface 44 into separate data and power signals. In one embodiment the POE + Ethernet interface 44 transmits power as the DC component of the signal and data is transferred as the AC component. In other embodiments a data signal may be superimposed on any power signal. In yet another embodiment data and power are transmitted on separate pins of the Ethernet cable connection. The POE + Ethernet transformer 46 is configured to supply power signal to a POE power supply 48. In this embodiment the POE power supply 48 is a switching power supply. In one embodiment the POE power supply 48 is capable of handling at least 25.5 watts (in compliance with POE + guidelines) while in another embodiment the POE power supply 48 is capable of handling at least 60 watts (in compliance with Universal POE - UPOE guidelines). The POE power supply 48 is configured to supply power to a DC/DC convertor 52. The DC/DC convertor 52 is a power supply configured to convert the power received from the POE power supply 48 in to medically isolated power. In this embodiment the medically isolated power supplied by the DC/DC convertor 52 complies with IEC 60601 standards while in other embodiments the medically isolated power supplied by DC/DC convertor 52 may comply with any standard. The DC/DC convertor 52 also serves as a voltage step down transformer in one embodiment.

Medically isolated power is supplied by DC/DC convertor 52 to a power switch 72 in this embodiment. An alternating current (AC) power source, AC plug 68 is configured to supply power to an AC/DC power supply 70. In this embodiment the AC plug 68 is a wall outlet while in other embodiments the AC plug may be a power strip. The AC/DC power supply 70 is mounted to the lower frame 12 in this embodiment while in other embodiments AC/DC power supply 70 may be mounted anywhere on the person support apparatus 10. In one embodiment AC/DC power supply 70 is a switched power supply while in another embodiment the AC/DC power supply 70 is a linear power supply. AC/DC power supply 70 converts AC power received from AC plug 68 into DC power. The AC/DC power supply 70 is configured to provide medical isolation from the power received from the AC plug 68. In this embodiment the medical isolation complies with IEC 60601 standards while in other embodiments the isolated power supplied by AC/DC power supply 70 may comply with any standard. The AC/DC power supply 70 also serves as a voltage step down transformer in one embodiment. The AC/DC power supply 70 supplies power to the power switch 72.

The power switch 72 is configured to receive power from both the AC/DC power supply 70 and DC/DC convertor 52 in this embodiment. The power switch 72 is mounted on a circuit board, power switch 72 may be mounted anywhere on the person support apparatus 10. The power switch 72 allows switching between power supply from AC/DC power supply 70 and DC/DC convertor 52 in one embodiment. In another embodiment the power switch 72 is configured to supply power from both AC/DC power supply 70 and DC/DC convertor 52 to a battery charger circuit 58. The power switch 72 is operated by the controller 56 in this embodiment, while in another embodiment operation of the power switch 72 is configured to be controlled by user input via a user interface (not shown). In another embodiment the power switch 72 is omitted and power from both AC/DC power supply 70 and DC/DC convertor 52 is supplied directly to the battery charger 58.

The battery charger circuit 58 in this embodiment converts medically isolated power into a charge voltage and / or current for the battery 60. In another embodiment multiple batteries 60 are charged by the battery charger circuit 58. The battery charger circuit 58 is configured to mount on a circuit board which in turn mounts on the lower frame 12 in this embodiment. In other embodiments the circuit board comprising the battery charger circuit 58 may be mounted anywhere on the person support apparatus 10. In one embodiment the battery charger circuit 58 mounts on the same circuit board as the power switch 72. In this embodiment the battery 60 is a Lithium-Ion battery (Li-ion) and is mounted on the lower frame 12 of the person support apparatus 10. In other embodiments battery 60 may be of any type including but not limited to Nickel Cadmium (NiCd) and Nickel Metal Hydride (NiMH). In other embodiments the battery 60 may be mounted anywhere on the person support apparatus 10. In this embodiment the battery 60 is configured to provide a voltage of up to 30 Volts, in one embodiment the battery 60 is configured to provide voltage in the range of 25-30 Volts. In other embodiments the battery 60 may be configured to provide any voltage. At least one actuator 62 and / or a voltage regulator 64 are configured to receive power from the battery 60. In one embodiment the actuator 62 is configured to actuate a portion of the person support apparatus 10, in another embodiment multiple actuators receive power from the battery 60. In one exemplary embodiment the actuator 62 is configured to elevate the weigh frame 18 with respect to the lower frame 12. In one embodiment the actuator is configured to charge the battery 60 by acting as a generator. The voltage regulator 64 is configured to receive power from the battery 60 and supply power within a specified voltage range to other devices. In one exemplary embodiment the voltage regulator 64 is configured to supply voltage up to 3 volts.

The POE + Ethernet Transformer 46 supplies a data signal to an Ethernet data isolation module 54 after isolating the data signal from the signals received from the POE + Ethernet interface 44 in the embodiment shown in FIG.1. Ethernet data isolation module 54 is configured to provide medical isolation of data received from the POE + Ethernet Transformer 46 and supply the isolated data signal to a controller 56. In this embodiment the controller 56 is a microcontroller and is mounted on a circuit board. In one embodiment the controller 56 is mounted on the same circuit board as the battery charger circuit 58 while in another embodiment the controller 56 is mounted on an independent circuit board anywhere on the person support apparatus 10. In this embodiment the controller 56 is configured to communicate with the network switch 40 via Link Layer Discovery Protocol to request additional power.

The foregoing description is for the purpose of illustration only. The use of any and all examples, or exemplary language (e.g., "such as") provided herein, is intended merely to better illustrate the subject matter. The use of the term "based on" and other like phrases indicating a condition for bringing about a result is not intended to foreclose any other conditions that bring about that result. No language in the specification should be construed as indicating any element as essential.

Preferred embodiments are described herein, including the best mode known to the inventor. Of course, variations of those preferred embodiments will become apparent to those of ordinary skill in the art upon reading the foregoing description. The inventor expects skilled artisans to employ such variations as appropriate. Moreover, any combination of the above-described elements in all possible variations thereof is encompassed unless otherwise indicated herein or otherwise clearly contradicted by context.

## Claims

1. A power supply system comprising a person support apparatus, a battery configured to supply power to said person support apparatus, said battery mounted on said person support apparatus, and an Ethernet transformer configured to receive data and power signals and configured to supply power to said battery.

2. The power supply system of claim 1 further comprising an Ethernet interface configured to supply data and power signals to said Ethernet transformer.

3. The power supply system of claim 2 further comprising a network switch comprising a network interface, said network switch configured to supply data and power signals to said Ethernet interface.

4. The power supply system of claim 3 further comprising a controller configured to receive data signal from said Ethernet transformer.

5. The power supply system of claim 4 wherein said controller is configured to send a control signal to said network switch.

6. The power supply system of any preceding claim wherein power supplied to said battery by said Ethernet transformer is medically isolated.

7. The power supply system of any preceding claim wherein said battery is configured to supply up to 30 Volts.

8. The power supply system of any preceding claim further comprising a voltage regulator configured to receive power from said battery.

9. The power supply system of claim 8 wherein said voltage regulator is configured to supply up to 3 Volts.

10. The power supply system of any preceding claim further comprising an actuator configured to receive power from said battery.

11. The power supply system of any preceding claim wherein said battery is configured to receive power from an alternating current power source.

12. The power supply system of claim 11 wherein power received by said battery from said alternating current power source is medically isolated.

13. The power supply system of either claim 11 or claim 12 wherein power is supplied from said alternating current source and said Ethernet transformer via a power switch to said battery.

14. The power supply system of any one of claims 11 to 13 further comprising a controller configured to provide a control signal to said power switch, said power switch configured to regulate the proportions of power received from said alternating current power source and power received from said Ethernet transformer to said battery.

15. A method of providing power to a person support apparatus comprising:
supplying data and power to an Ethernet transformer;
supplying power from said Ethernet transformer to a battery, said battery mounted on said person support apparatus.
